**Europäisches Patentamt**

**European Patent Office**

**Office européen des brevets**

(19)

(11) Publication number: **0 013 825**
**B1**

(12)   **EUROPEAN PATENT SPECIFICATION**

(45) Date of publication of patent specification: **12.01.83**

(21) Application number: **79303002.4**

(22) Date of filing: **21.12.79**

(51) Int. Cl.³: **C 09 D  3/81, C 08 G  59/32, C 08 G  59/40**

(54) Coating compositions including hydroxy functional acrylic organophosphate reactive catalyst.

(30) Priority: **26.12.78 US  973325**
**26.12.78 US  973326**
**26.12.78 US  973329**
**26.12.78 US  973330**

(43) Date of publication of application:
**06.08.80 Bulletin 80/16**

(45) Publication of the grant of the patent:
**12.01.83 Bulletin 83/2**

(84) Designated Contracting States:
**DE FR GB IT**

(56) References cited:
**DE - C - 952 386**
**FR - A - 1 373 868**
**FR - A - 1 577 749**
**FR - A - 2 413 450**
**GB - A - 2 011 423**
**US - A - 3 651 169**

(73) Proprietor: **FORD MOTOR COMPANY LIMITED**
**Eagle Way**
**Brentwood Essex CM13 3BW (GB)**
(84) **GB**

(73) Proprietor: **FORD-WERKE AKTIENGESELLSCHAFT**
**Ottoplatz 2 Postfach 21 03 69**
**D-5000 Köln 21 (DE)**
(84) **DE**

(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(73) Proprietor: **Ford Motor Company**
**Dearborn County of Wayne Michigan (US)**
(84) **IT**

(72) Inventor: **Chattha, Mohinder S.**
**33466 Vargo**
**Livonia, Michigan 48152 (US)**

(74) Representative: **Drakeford, Robert William et al,**
**Ford Motor Company Limited 15/448, Research &**
**Engineering Centre Laindon**
**Basildon Essex SS15 6EE (GB)**

Courier Press, Leamington Spa, England.

Coating compositions including hydroxy functional acrylic organophosphate reactive catalyst

This invention relates to coating compositions including hydroxy—functional acrylic organophosphate reactive catalysts.

DE—C—952386 discloses the use of polymeric organophosphate compounds, obtained by reacting polymers of styrene or vinyltoluene and a polymerisable ethylenically-unsaturated epoxy compound with phosphoric acid or a partial ester thereof, as film and coating materials.

Thermosetting coating compositions which cure by reaction of hydroxy functionality with an amino compound are well known in the art. It is also well recognized in the art that it is desirable to catalyze the hydroxy/amino crosslinking reaction in order to attain a quicker and more complete cure of the coating composition. To this end, catalysts for this reaction have been developed and are also well known.

US—A—3,960,979 and US—A—4,018,848 (Khanna) teach high solids coating compositions adapted for use as a can coating material. The compositions consist essentially of (i) aromatic epoxide compositions having two or more epoxy groups on an epoxy resin which has a molecular weight not exceeding 2500; (ii) an amino crosslinking agent; (iii) an inorganic or organic monomeric or polymeric acid which acts as a reactive catalyst; and (iv) a flexibilizing polyol.

The compositions of Khanna have the advantage of quick reaction and low application viscosity, but lack durability, and, therefore, do not weather well. This is, in part, because of the presence of ether linkages in the aromatic epoxides. As such, the compositions of Khanna are not desirable for use as automotive topcoats. The Khanna patents describe the compositions as a low cure system. However, when considering the specific teachings of the patents one finds that the composition includes an excess of epoxide resin, apparently with the purpose of "killing off" excess catalyst after completion of the curing reaction. Excess epoxy resin in the composition remains uncured at the low temperature bake range of the baking temperatures disclosed, not giving a complete cure and desirable hardness, durability or solvent resistance. If heated to higher temperatures, as called for in the examples, the excess epoxy does react with excess hydroxy functionality to give still further ether linkages. These ether linkages so obtained have a further deleterious effect on durability and make the topcoat. Also, the necessary high bake temperatures to achieve the utilization of this excess epoxy makes the composition undesirable from an energy point of view. Still further, because the epoxy/catalyst reaction occurs in early stages of the cure, thus "killing off" the catalyst, the melamine-hydroxy curing reaction must proceed substantially without benefit of catalysis. The curing reaction thus proceeds slowly and requires the higher temperatures of the Khanna examples.

Because of increasingly strict solvent emissions regulations in recent years, low solvent emission paints have become very desirable. A number of high solids paint compositions have been proposed to meet these low solvent emission requirements. However, many of these compositions are deficient because of difficulty in application, slow curing rates, lack of flexibility, poor durability and low solvent and water resistance. Many of the proposed compositions have been particularly deficient as automotive topcoats, particularly when the topcoat is to include metallic flake as a pigment.

The deficiency in compositions including metallic flake results from undesired reorientation of the metallic flake during application and cure of the coating. Flake reorientation results primarily because of the very low viscosity resins used in the paint compositions to accommodate high solids. The low viscosity is not sufficient to immobilize the flakes which tend to redistribute themselves to show "reverse flop" and nonuniform distribution.

According to the present invention, thermosetting coating compositions of the aforementioned type, wherein the crosslinking reaction consists essentially of a reaction between hydroxy functionality and an amino compound are catalyzed by a hydroxy functional acrylic organophosphate reactive catalyst consisting essentially of the reaction product of (1) a hydroxy functional acrylic copolymer which (a) has a number average molecular weight ($\overline{M}_n$) of between 1500 and 6000, (b) has a glass transition temperature of between −25°C and 70°C, and (c) bears between 2 and 10 pendent hydroxyl groups per molecule; and (2) sufficient phosphorus pentoxide to produce a reaction product having an acid equivalent weight of between 500 and 3000.

In particular, it has been found that compositions catalyzed by such hydroxy functional acrylic organophosphate reactive catalysts exhibit rapid cure at low temperature and produce coatings with superior properties. In addition, the hydroxy functional acrylic organophosphate reactive catalyst does not become involved in deleterious side reactions as is the case with many conventional catalysts and has the further advantage of not leaching out of the coating composition after curing is completed.

More specifically, the catalyzed coating compositions of the invention include the broad class of thermosetting compositions wherein hydroxy functionality of the film forming component, which hydroxy functionality is either initially present, generated in situ, or both initially present, and generated in situ, is crosslinked with conventional amino functional crosslinking agents. As will be more fully described hereinafter, the hydroxy functionality which may be generated in situ may be generated in any manner known to the art with respect to this type of composition or it may be generated by a reaction between the catalyst itself and functionality in the film forming material, in particular, between the catalyst and epoxy functionality on the film forming material. In this case, the catalyst serves as reactant which helps generate the hydroxy functionality subsequently engaged in the crosslinking reaction with the amino compound.

The preferred compositions of the invention contain greater than 50 percent by weight of non-volatile solids, preferably greater than 60 percent by weight, and are capable of curing rapidly at a low temperature. These compositions, exclusive of pigments, solvents and other nonreactive components, consists essentially of: (A) a film-forming resin bearing epoxy functionality or both epoxy and hydroxy functionality; (B) the catalyst described above; (C) an amino crosslinking agent; and (D) up to 45 weight percent based on the total of (A), (B), (C) and (D) of a hydroxy functional additive.

The amount of the hydroxy functional acrylic organophosphate reactive catalyst included in the compositions of the invention will vary depending on the nature of the film forming material employed and is a matter of choice which will be made by one skilled in the art. In preferred compositions, particularly the high solids paint compositions referred to above, the hydroxy functional acrylic organophosphate reactive catalyst generally is included in an amount sufficient to provide between 0.9 and 1.5 equivalents, preferably between 1.0 and 1.2 equivalents of acid functionality per equivalent of epoxy on the film forming resin.

The amount of amino resin crosslinking agent employed in compositions of the invention is also a matter of choice depending on the final properties desired and the nature of the other materials in the coating composition. Preferred compositions include the amino resin crosslinking agent in amounts sufficient to provide at least 0.4 equivalents, preferably between 0.6 and 2.1 equivalents, of nitrogen crosslinking functionality for each equivalent of hydroxy functionality included in the composition either as (i) an organic hydroxyl group on the hydroxy functional acrylic organophosphate reactive catalyst, (ii) hydroxy functionality on the film-forming resin, (iii) a hydroxyl group on the optional hydroxy functional additive, or (iv) as a result of esterification of the epoxy functionality of the film-forming resin during cure of the coating composition. Other ingredients of the composition may include additives such as catalysts, antioxidants, U.V. absorbers, flow control or wetting agents, antistatic agents, pigments, plasticizers, solvents.

The preferred coating compositions of this invention combine the above discussed desired properties and low application viscosity with rapid cure so as to overcome deficiencies of previously proposed high solids materials and thereby achieve a high solids coating composition particularly adapted for automotive topcoats and still more particularly adapted for automotive topcoats including metallic flake as a pigment.

Particularly preferred compositions within the scope of the invention are fast curing, high solids, thermosetting coating compositions. More particularly, these preferred compositions are adapted to provide an automotive topcoat which demonstrates hardness, high gloss, outstanding durability and excellent resistance to solvents and water. Still more particularly, the preferred compositions are fast curing, high solids, thermosetting coating compositions adapted to be used as automotive topcoats including metallic flake as a pigment.

As discussed generally above, the coating compositions of the invention are thermosetting materials comprising a film-forming material bearing hydroxy functionality which is either initially present in the composition or which is formed by in situ reaction, an amino compound crosslinking agent, and the catalyst.

The preferred high solids coating compositions of the invention overcome disadvantages of prior art high solids compositions, including those of the Khanna patent discussed above, to provide a system which is particularly suitable for those applications requiring high gloss, hardness, durability, and high solvent and water resistance as well as a fast cure rate at low temperatures, e.g., between 75°C and 150°C, preferably between 110°C and 130°C. The desirable characteristics of these preferred compositions of the invention result from the carefully controlled admixture of the particular components, including a hydroxy functional acrylic organophosphate reactive catalyst, to achieve substantially complete utilization of reactant functionality and a resultant highly crosslinked coating in a fast and efficient manner.

Each of the components of the compositions of the invention, in general, and the high solids coating compositions in particular, are described hereinafter in greater detail.

Hydroxy functional acrylic organophosphate reactive catalyst

The hydroxy functional acrylic organophosphate reactive catalyst employed in compositions of the invention consists essentially of the reaction product of:

(1) a hydroxy functional acrylic copolymer which (a) has a number average molecular weight ($\overline{M}n$) of between 1500 and 6000, (b) has a glass transition temperature of between −25°C and 70°C, preferably between −10°C and 50°C, and (c) bears between 2 and 10 pendent hydroxyl groups per molecule; and

(2) sufficient phosphorus pentoxide to produce a reaction product having an acid equivalent weight of between 500 and 3000, preferably between 700 and 1500.

The reaction between the hydroxy bearing acrylic copolymer and the phosphorus pentoxide is

3

**O O13 825**

generally carried out by adding phosphorus pentoxide portionwise to the hydroxyl bearing acrylic copolymer, preferably an excess of the copolymer, in a liquid state or in solution in a suitable solvent. Suitable solvents include, but are not limited to, buty acetate, methyl ethyl ketone, methyl amyl ketone, toluene, xylene.

The hydroxy bearing acrylic copolymers used in preparing the hydroxy functional acrylic organophosphate reactive catalyst, as noted above, have a number average molecular weight of between 1500 and 6000 and a glass transition temperature of between $-25°C$ and $70°C$, preferably between $-10°C$ and $50°C$. These hydroxy functional copolymers are prepared by copolymerizing various monoethylenically unsaturated monomers, including at least fifty (50) weight percent of alpha-beta olefinically unsaturated acrylate monomers. Preferred acrylate monomers are esters of $C_1$—$C_{12}$ monohydric alcohols and acrylic or methacrylic acids, e.g., methylmethacrylate, ethylacrylate, butylacrylate, butylmethacrylate, hexylacrylate, 2-ethylhexylacrylate, laurylmethacrylate.

Hydroxy functional ethylenically unsaturated monomers are included in the reaction mixture of monomers used in preparing the copolymer in sufficient amounts that the copolymer molecules formed bear between 2 and 10 hydroxyl groups. The long list of hydroxy functional monomers which may be employed in these hydroxy functional copolymers includes, but is not limited to, the following esters of acrylic or methacrylic acid and aliphatic alcohols: 2 - hydroxyethyl acrylate 3 - chloro - 2 - hydroxypropyl acrylate; 2 - hydroxy - 1 - methylethyl acrylate; 2 - hydroxypropyl acrylate; 3 - hydroxy - propyl acrylate; 2,3 dihydroxypropyl acrylate; 2 - hydroxy - butyl acrylate; 4 - hydroxybutyl acrylate; diethyleneglycol acrylate; 5 - hydroxypentyl acrylate; 6 - hydroxyhexyl acrylate; triethyleneglycol acrylate; 7 - hydroxyheptyl acrylate; 2 - hydroxymethyl methacrylate; 3 - chloro - 2 - hydroxypropyl methacrylate; 2 - hydroxy - 1 - methylethyl methacrylate; 2 - hydroxypropyl methacrylate; 3 - hydroxypropyl methacrylate; 2 - hydroxypropyl methacrylate; 2,3 dihydroxypropyl methacrylate; 2 - hydroxybutyl methacrylate; 4 - hydroxybutyl methacrylate; 3,4 dihydroxybutyl methacrylate; 5 - hydroxypentyl methacrylate; 6 - hydroxyhexyl methacrylate; 1,3 - dimethyl - 3 - hydroxybutyl methacrylate; 5,6 dihydroxyhexyl methacrylate; and 7 - hydroxyheptyl methacrylate.

Although one of ordinary skill in the art will recognize that many different hydroxy bearing monomers including those listed above could be employed, the preferred hydroxy functional monomers for use in the hydroxy functional copolymer used to prepare the hydroxy functional acrylic organophosphate reactive catalysts are $C_5$—$C_7$ hydroxy alkyl methacrylates, i.e., esters of $C_2$—$C_3$ dihydric alcohols and acrylic or methacrylic acids.

Other monoethylenically unsaturated monomers which may be used in preparing these copolymers are monovinyl hydrocarbons and certain modifying monomers. These monomers may comprise the remainder of the monomers making up the copolymer, other than said acrylate monomers and said hydroxy functional monomers; provided, however, that the modifying monomers should constitute only up to 10 weight percent of the monomers in the copolymer. Exemplary of suitable monovinyl hydrocarbons are those containing 8 to 12 carbon atoms, such as styrene, alpha-methylstyrene, vinyl toluene, t-butylstyrene and chlorostyrene. Modifying monomers may include vinylchloride, acrylonitrile, methacrylonitrile and vinylacetate.

In preparing the hydroxy functional acrylic copolymer, the various monomers may be mixed and reacted by conventional free radical initiated polymerization in such proportions as to obtain the copolymer desired. A large number of free radical initiators are known to the art and are suitable for the purpose. These include: benzoyl peroxide; acetylcyclohexyl sulfonyl peroxide; diisobutyryl peroxide; di – (2-ethylhexylperoxypivalate); decanoyl peroxide; azobis(2-methylpropionitrile). The polymerization is preferably carried out in solution using a solvent in which the hydroxy functional copolymer is soluble. Included among the suitable solvents are toluene, xylene, dioxane, butanone. If the hydroxy functional copolymer is prepared in solution, the solid copolymer can be precipitated by pouring the solution at a slow rate into a nonsolvent for the copolymer, such as hexane, octane, or water under suitable agitation conditions. The copolymers can also be prepared by emulsion polymerization suspension polymerization, bulk polymerization, or combinations thereof, or still other suitable methods. In these methods of preparing copolymers, chain transfer agents may be required to control the molecular weight.

A preferred temperature for carrying out the reaction between the aforementioned hydroxy functional acrylic copolymer and the phosphorus pentoxide is between $50°C$ and $60°C$. Due to the multiple hydroxy functionality of the hydroxy functional acrylic copolymer, various polymeric acid phosphates and cyclophosphates are probably generated during the synthesis. All of these organophosphate derivatives so produced serve as a reactive catalyst and, therefore, the entire reaction product mixture may be employed as the reactive catalyst. In those cases where an excess of the hydroxy functional acrylic copolymer is employed, that excess may serve as all or part of the optional hydroxy functional additive of the composition, as hereinafter described.

The hydroxy functional acrylic organophosphate reactive catalyst of the thermosetting coating compositions of the invention allows the compositions to cure rapidly at a low temperature. In all cases, the hydroxy functionality present on the hydroxy functional acrylic organophosphate reactive catalyst engages in the crosslinking reaction by reacting with the amino compound in addition to catalyzing the reaction between the amino compound and the hydroxy functionality present in the film forming

4

materials. It is this reaction of the hydroxy functionality of the hydroxy functional acrylic organophosphate reactive catalyst which probably accounts for the fact that the catalyst does not leach out of the finally cured composition. Thus, the catalyst serves not only to catalyze the reaction between the film forming material and the crosslinking agent, but also to more completely tie up the matrix of the composition and provide a more completely integrated crosslinked composition. In those embodiments of the invention wherein the film forming material also includes an epoxy material, either on the same compound as the hydroxy functionality or on a separate compound forming a part of the film forming material, the hydroxy functional acrylic organophosphate reactive catalyst of the invention serves as a reactive catalyst in another sense. In this case, the acid functionality of the organophosphate ester(s) present in the catalyst reacts with the epoxy functionality of the film forming material to form an ester and a hydroxyl group. This hydroxyl group, as well as the organic hydroxyl groups on the hydroxy functional acrylic organophosphate reactive catalyst and the other hydroxy functionality which may be present in the film forming material is available for crosslinking with the amino crosslinking agent.

As discussed above, the amount of the hydroxy functional acrylic organophosphate reactive catalyst included in the compositions of the invention will vary depending upon the nature of the film forming material employed and is a matter of choice will be made by one skilled in the art. Preferred compositions include the catalyst in an amount sufficient to provide between 0.9 and 1.5 equivalents of acid functionality per equivalent of epoxy functionality on the film forming material.

Film forming material

As discussed above, film forming materials which either include hydroxy functionality initially, generate hydroxy functionality as a result of in situ reactions during the coating process or both include hydroxy functionality initially and generate it in situ, are well known to those skilled in the art. Selection of those materials will be matter of choice and it will be recognized that the hydroxy functional acrylic organophosphate reactive catalyst is equally applicable to all such hydroxy bearing film forming materials crosslinked with amino compound.

While it is intended that all such hydroxy bearing film forming materials be included within the scope of the invention, several of these materials will be discussed below in greater detail for purposes of exemplification.

As discussed above, the film forming material may consist essentially of a compound which bears hydroxy functionality prior to initiation of the curing reaction. In most coating compositions, such materials should have a number average molecular weight ($\overline{M}_n$) of at least 150. A preferred type of hydroxy functional material which meets these limitations consists essentially of a copolymer bearing pendent hydroxy functionality. One class of such materials has a number average molecular weight ($\overline{M}_n$) of between 1000 and 20,000 and a glass transition temperature (Tg) of between −25°C and 70°C. Such a copolymer may, for example, consist of between 5 and 30 weight percent of monoethylenically unsaturated monomers bearing hydroxy functionality and between 95 and 70 weight percent of other monoethylenically unsaturated monomers.

The long list of hydroxy functional monomers which may be employed in these hydroxy functional copolymers includes, but is not limited to, the following esters of acrylic or methacrylic acid and aliphatic alcohols: 2 - hydroxyethyl acrylate; 3 - chloro - 2 - hydroxypropyl acrylate; 2 - hydroxy - 1 - methylethyl acrylate; 2 - hydroxypropyl acrylate; 3 - hydroxypropyl acrylate; 2,3 - dihydroxypropyl acrylate; 2 - hydroxybutyl acrylate; 4 - hydroxybutyl acrylate; diethyleneglycol acrylate; 5 - hydroxypentyl acrylate; 6 - hydroxy - hexyl acrylate; triethyleneglycol acrylate; 7 - hydroxy - heptyl acrylate; 2 - hydroxymethyl methacrylate; 3 - chloro - 2 - hydroxypropyl methacrylate; 2 - hydroxy - 1 - methylethyl methacrylate; 2 - hydroxypropyl methacrylate; 3 - hydroxypropyl methacrylate; 2,3 - dihydroxypropyl methacrylate; 2 - hydroxybutyl methacrylate; 4 - hydroxybutyl methacrylate; 3,4 - di - hydroxybutyl methacrylate; 5 - hydroxypentyl methacrylate; 6 - hydroxyhexyl methacrylate; 1,3 - dimethyl - 3 - hydroxybutyl methacrylate; 5,6 - dihydroxyhexyl methacrylate; and 7 - hydroxy - heptyl methacrylate.

Although one of ordinary skill in the art will recognize that many different hydroxy bearing monomers including those listed above could be employed, the preferred hydroxy functional monomers for use in the hydroxy functional resin of the invention are $C_5$—$C_7$ hydroxy alkyl acrylates and/or $C_6$—$C_8$ hydroxy alkyl methacrylates, i.e., esters of $C_2$—$C_3$ dihydric alcohols and acrylic or methacrylic acids.

The remainder of the monomers forming the hydroxy functional copolymer, i.e., between 90 and 70 weight percent, are other monoethylenically unsaturated monomers. These monoethylenically unsaturated monomers, are preferably alpha, beta olefinically unsaturated monomers, i.e., monomers bearing olefinic unsaturation between the two carbon atoms in the alpha and beta positions with respect to the terminus of an aliphatic carbon to carbon chain.

Among the alpha-beta olefinically unsaturated monomers which may be employed in such copolymers are acrylates (meaning esters of either acrylic or methacrylic acids) as well as mixtures of acrylates and vinyl hydrocarbons. Preferably, in excess of 50 weight percent of the total of the copolymer monomers are esters of $C_1$—$C_{12}$ monohydric alcohols and acrylic or methacrylic acids, e.g., methylmethacrylate, 2-ethylhexylacrylate, laurylmethacrylate. Among the monovinyl hydrocarbons

5

suitable for use in forming the copolymers are those containing 8 to 12 carbon atoms and including styrene, alpha methylstyrene, vinyl toluene, t-butylstyrene and chlorostyrene. When such monovinyl hydrocarbons are employed, they should constitute less than 50 weight percent of the copolymer. Other monomers such as vinyl chloride, acrylonitrile, methacrylonitrile, and vinyl acetate may be included in the copolymer as modifying monomers. However, when employed, these modifying monomers should constitute only between 0 and 30 weight percent of the monomers in the copolymer.

As mentioned above, the film forming material may contain both hydroxy functionality and a material which reacts in situ to form hydroxy functionality. Exemplary of one such film forming material would be a material which consists essentially of a single copolymer bearing both hydroxy and epoxy functionality, the epoxy functionality reacting with the acid functionality of the hydroxy functional acrylic organophosphate esters of the reactive catalyst as discussed above to form hydroxy functionality which thereafter may also react with the amino crosslinking agent. Such a difunctional copolymer may be of the acrylic type similar to the hydroxy functional copolymer discussed above. A preferred bifunctional copolymer of this type has a number average molecular weight ($\overline{M}_n$) of between 1500 and 10,000 and a glass transition temperature (Tg) of between −25°C and 70°C. Such a copolymer preferably is formed from between 5 and 25 weight percent of monoethylenically unsaturated monomers bearing glycidyl functionality e.g. glycidyl esters, especially of monoethylenically unsaturated carbonylic acids, or glycidyl ethers and between 5 and 25 weight percent of monoethylenically unsaturated monomers bearing hydroxy functionality, with the total of the monoethylenically unsaturated monomers bearing either said glycidyl functionality of said hydroxy functionality being not greater than 30 weight percent of the monomers in the copolymer. The remainder of the monomers in the copolymer, i.e., between 90 and 70 weight percent, consist of other monoethylenically unsaturated monomers, such as those described above.

Also as mentioned above, the film forming material may consist essentially of a compound which reacts in situ to form hydroxy functionality, i.e., a compound not initially including hydroxy functionality. Such a compound could be, for example, a copolymer such as those described above, but bearing only glycidyl functionality. Such a copolymer bearing pendent functionality would have a number average molecular weight ($\overline{M}_n$) of between 1500 and 10,000, preferably between 2,000 and 6,000, and a glass transition temperature (Tg) of between −25°C and 70°C, preferably between −10°C and 50°C. A preferred copolymer of this type consists of between 10 and 30 weight percent of monoethylenically unsaturated monomers bearing glycidyl functionality and between 90 and 70 weight percent of other monoethylenically unsaturated monomers, as discussed above.

Still another compound bearing epoxy functionality which may be employed when solely epoxy functionality, which in turn will react with the acid functionality of the organophosphate ester(s) in the reactive catalyst to form hydroxy functionality, is desired is a polyepoxide resin having a number average molecular weight of between 140 and 3000, preferably between 300 and 2,000. The term polyepoxide resin as used herein means epoxide compounds or polymers containing two or more epoxide groups. Such polyepoxide resins are preferably selected from aliphatic, cycloaliphatic and aromatic polyepoxides falling within the stated molecular weight range. Such polyepoxides are well known compositions and any of these may be employed. Among the many suitable types of polyepoxides are those disclosed by U.S.—A—3,404,018; 2,528,359; 2,528,360; 3,198,850; 3,960,979; and 4,018,848.

U.S.—A—3,404,018 discloses several particularly suitable types of polyepoxides including: (1) polyglycidyl ethers of polyhydric alcohols and polyhydric phenols; (2) epoxidized esters of polyethylenically unsaturated monocarboxylic acids; (3) glycidyl esters of polybasic acids; (4) epoxidized esters of unsaturated monohydric alcohols and polycarboxylic acids; and (5) epoxidized polymers and copolymers of diolefins. Many polyepoxides other than those recited in this or other referenced patents will be apparent to those skilled in the art.

As also mentioned above, there may be those instances when the film forming material desirably comprises separate compounds, one or more bearing hydroxy functionality and one or more others bearing functionality which reacts in situ to form hydroxy functionality. Such film forming materials might, for example, consist of the above noted hydroxy functional copolymer combined with the epoxy functional copolymer discussed above or the polyepoxide resin discussed above. Various other combinations of materials, of course, will be apparent to those skilled in the art. Still other film forming materials are exemplified in the detailed examples set forth hereinafter.

Amino crosslinking agent

Amino crosslinking agent suitable for crosslinking hydroxy functional bearing materials are well known in the art and their selection will be obvious to those skilled in the art. Typically, the crosslinking materials are products of reactions of melamine or urea with formaldehyde and various alcohols containing up to and including four carbon atoms. Among the numerous materials which may be employed are the amine aldehyde resins such as condensation products of formaldehyde with melamine, substituted melamine, urea, benzoguanamine or substituted benzoguanamine. Preferred members of this class are methylated melamine-formaldehyde resins such as hexamethoxymethylmelamine. These liquid crosslinking agents have substantially one hundred percent (100%) nonvolatile content as measured by the foil method at 45°C for 45 minutes. Some particularly well known crosslinking agents are the amino resins sold by American Cyanamid under the trademark "Cymel". In particular, Cymel 301, Cymel 303, and Cymel 1156, which are alkylated melamine-formaldehyde resins are useful in compositions falling within the scope of this invention.

Of course, the amount of crosslinking agent employed in any given composition is a matter of choice depending upon the final properties desired and the nature of the other materials in the coating composition.

Preferred high solids coating compositions

As indicated above, the high solids coating compositions within the scope of the invention include a film-forming resin bearing epoxy functionality or both epoxy and hydroxy functionality. Materials suitable for use in preparing the high solids compositions of the invention are the acrylic copolymers bearing glycidyl functionality or glycidyl and hydroxy functionality and the polyepoxide resins, all of which are described hereinbefore.

In addition to the film-forming resin and the hydroxy functional acrylic organophosphate reactive catalyst the compositions also include an amino crosslinking agent generally described above and an optional hydroxy functional additive in an amount up to 45 weight percent of the total of the four major components of the composition. The hydroxy functional additives provide additional hydroxy functionality so as to provide a more intimate crosslinked structure in the final cured product. These additives are typically selected from various polyols having a number average molecular weight ($\overline{M}_n$) of between 150 and 6,000, preferably between 400 and 2,500. As used herein the term polyol means a compound having two or more hydroxyl groups.

The polyols useful for the preferred high solids compositions of the invention preferably are selected from: (i) hydroxy functional polyesters; (ii) hydroxy functional polyethers; (iii) hydroxy functional oligoesters; (iv) monomeric polyols; (v) hydroxy functional copolymers produced by free radical polymerization of monoethylenically unsaturated monomers, one of which bears hydroxy functionality and which is included in the copolymer in an amount ranging from 2.5 to 30 weight percent of the copolymer and (vi) mixtures of (i)—(v).

The hydroxy functional polyesters useful in these preferred compositions are preferably fully saturated products prepared from aliphatic dibasic acids containing 2—20 carbon atoms, such as succinic acid, glutaric acid, adipic acid, azelaic acid, and short chain glycols of up to and including 21 carbon atoms, such as ethylene glycol, 1,2 - propylene glycol, 1,3 - propylene glycol, 1,2 - butylene glycol, 1,3 - butylene glycol, 1,4 - butylene glycol, neopentyl glycol, 1,4 - cyclohexane dimethylol, 1,6 - hexamethylene glycol and 2 - ethyl - 2 - methyl - 1,3 propane diol. The molecular weight of these materials ranges from 200 to 2,500 and the hydroxyl number ranges from 30 to 230. The hydroxyl number is defined as the number of milligrams of potassium hydroxide needed for each gram of sample to neutralize the acetic acid generated during the reaction between the polyol and the excess acetic anhydride. The polyester polyols utilized in the compositions are low melting, soft waxy solids which are easily maintained in the molten state.

Among preferred polyesters are products derived from the esterification of ethylene glycol and 1,4 butane diol with adipic acid, ethylene glycol and 1,2 propylene glycol with adipic acid, azelaic acid and sebacic acid copolyester diols, and mixtures thereof.

Among useful polyether diols are polytetramethylene ether glycol, polyethylene glycol, polypropylene glycol and the like.

The hydroxy functional oligoesters useful as hydroxy functional additives in the preferred compositions of the invention are oligoesters preferably having a molecular weight of between 150 and 3,000. Such oligoesters may be selected from the group consisting of: (i) oligoesters prepared by reacting a dicarboxylic acid with a monoepoxide such as an alkylene oxide; (ii) oligoesters prepared by reacting a polyepoxide with a monocarboxylic acid; and (iii) oligoesters prepared by reacting a hydroxy functional monocarboxylic acid with either a mono- or polyepoxide.

The oligoester prepared by reacting a dicarboxylic acid with an alkylene oxide is a low molecular weight adduct which has a narrow molecular weight distribution when compared to similar compositions made by normal polyester manufacturing techniques. The adduct is prepared by reacting a dibasic carboxylic acid with alkylene oxides, preferably ethylene oxide or propylene oxide, in the presence of a catalyst. Preferred carboxylic acids are $C_6$—$C_{12}$ aliphatic acids such as adipic acid, azelaic acid, sebacic acid or dodecane dicarboxylic acid. Mixtures of these acids or mixtures of the aliphatic dicarboxylic acids with aromatic dicarboxylic acids also yield suitable hydroxy functional oligoesters.

The preparation of oligoesters from monocarboxylic acids and polyepoxides is well known and is described, for example, in U.S.—A—2,456,408 and US—A—2,653,141. Numerous hydroxy functional oligoesters within this general category will be apparent to those skilled in the art.

A third type of hydroxy functional oligoester, i.e., those prepared by reaction of a hydroxy functional monocarboxylic acid with an epoxide is described in U.S.—A—3,404,018. While the epoxides employed in accordance with the teachings of that patent are polyepoxides, oligoesters may be prepared in a similar manner to that described therein by employing a monoepoxide, such as an alkylene oxide, and a hydroxy functional monocarboxylic acid as described therein. Numerous monoepoxide materials suitable for this purpose will be apparent to those skilled in the art.

Among the numerous monomeric polyols which may be employed as the hydroxy functional additive are the various short chain glycols of up to and including 21 carbon atoms which are useful in preparing the hydroxy functional polyesters discussed above. Other conventional polyhydric alcohols such as glycerols and sugar alcohols are also among the numerous monomeric polyols which will be apparent to those skilled in the art.

The hydroxy bearing copolymer described above for use as a film-forming material for compositions of the invention, in general may also be used as a hydroxy-functional additive in the preferred high solids coating compositions of the invention.

It is the reactive nature of the hydroxy-functional acrylic organophosphate reactive catalyst component which allows the composition to cure rapidly at a low temperature. As indicated generally above, the acid functionality of the organophosphate catalyst reacts with the epoxy functionality of the epoxy functional film-former to form an ester and a hydroxyl group. This hydroxyl group, as well as the organic hydroxyl groups on the hydroxy functional acrylic organophosphate ester, any hydroxyl groups in the film-former in addition to the epoxy functionality and any optional hydroxy groups included in the composition in the form of hydroxy functional additive, including any diol or triol present from the synthesis of the hydroxy functional organophosphate ester, crosslinks with the amino resin crosslinking agent. It is critical to achieving the desired results of the high solids coating compositions of this invention, i.e., in making them suitable for use as automotive topcoats, that the amount of hydroxy functional acrylic organophosphate reactive catalyst be sufficient to convert substantially all of the epoxy functionality on the film-former to the desired hydroxy functionality by esterification reaction. Therefore, the hydroxy functional acrylic organophosphate reactive catalyst is included in the composition in an amount sufficient to provide between about .9 and 1.5 equivalents, preferably between 1.0 and 1.2 equivalents, of acid functionality for each equivalent of pendent epoxy functionality on the copolymer. As will be noted from the equivalent amounts of epoxy and organophosphate ester acid functionality stated above, the amount of acid functionality need not be in stoichiometric amounts to the epoxy functionality. This is because of the fact that during curing of the high solids coating composition, residual water present in the composition hydrolyzes some of the esterified product back to acid and this hydrolyzed product then, in turn, reacts with additional epoxy functionality.

As also indicated above, the amino resin materials function as a crosslinking agent by reacting with hydroxy functionality present in the composition. In the preferred high solids compositions of the invention this hydroxy functionality may be present (i) in an organic hydroxyl group on the hydroxy functional acrylic organophosphate ester, (ii) as a hydroxyl group on the film-former in those cases where that component bears hydroxy as well as epoxy functionality; (iii) as a hydroxyl group on the optional hydroxy functional additive including any excess diol or triol from the organophosphate synthesis or (iv) as a result of esterification of the epoxy functionality of the film-former.

In order to achieve the outstanding properties which makes these preferred high solids coating compositions particularly useful as automotive topcoat materials, it is essential that the amount of amino crosslinking agent be sufficient to substantially completely crosslink the hydroxy functionality in the coating composition. Therefore, the amino resin crosslinking agent should be included in the composition in an amount sufficient to provide at least .4 equivalents, preferably between .6 and 2.1 equivalents, of nitrogen crosslinking functionality for each equivalent of hydroxy functionality included in the composition.

Other materials

Of course, it should be recognized that coating compositions within the scope of this invention including the preferred high solids compositions may include other conventional components. These include, but are not limited to, antioxidants, U.V. absorbers, solvents, surface modifiers, wetting agents, pigments, fillers.

The invention will be further understood by referring to the following detailed examples. It should be understood that the specific examples are presented by way of illustration and not by way of limitation. Unless otherwise specified, all references to "parts" are intended to mean parts by weight.

The words "ARALDITE", "CYMEL", "ACRYLOID", "DESMOPHEN", "MELLINCKRODT" and "EPON" are all trade marks.

Example 1

A hydroxy acrylic copolymer is prepared from the following monomers:

|  | Wt/Grams | Wt. % |
| --- | --- | --- |
| Hydroxyethyl acrylate | 400 | 20 |
| Methylmethacrylate | 400 | 20 |
| Styrene | 200 | 10 |
| Butyl methacrylate | 1000 | 50 |

One hundred (100) grams tert-butyl perbenzoate is added to the above monomer mixture and the resulting solution added dropwise over a period of two hours to 1600 grams of refluxing (145°) methyl amyl ketone (under nitrogen). The heating and stirring is continued for half an hour after the addition is complete and then five (5) grams of tert-butyl perbenzoate are added portionwise to the reaction mixture. The reaction mixture is refluxed for an additional ninety minutes and then allowed to cool to room temperature. The molecular weight is determined by Gel Permeation Chromatography: $\overline{M}_n=2540$, $\overline{M}_w/\overline{M}_n=1.94$

    Calculated $T_g=27°C$
    Theoretical solids=60%
    Determined solids=59.2%
    Viscosity, #4 Ford Cup=44 Sec.
    Hydroxy equivalent weight=980

Five hundred (500) grams of the above polymer solution are dissolved in 100 ml n-butyl acetate and the solution is heated to 60°C. Solid $P_2O_5$ is added portionwise with continuous stirring and maintaining the temperature at 60°C. Small test portions of the reaction mixture are titrated with sodium hydroxide solution and the addition of $P_2O_5$ is continued until the acid equivalent weight reaches 1564.

One hundred (100) parts of the above prepared hydroxy functional acrylic organophosphate reactive catalyst reactive product mixture are mixed with 18.21 parts of Cymel 301, 13 parts of aliphatic epoxy Araldite CY-178 and 15 parts of butyl acetate. The resulting formulation is applied by spraying in three coats to primed steel panels; the panels were baked at 130°C for 20 minutes to obtain a glossy coating with excellent physical properties.

Example 2
    In a round-bottom four-necked flask equipped with a stirrer, a dropping funnel, a thermometer and a condenser, 500 ml of methyl amyl ketone is brought to reflux under nitrogen. The following mixture of monomers is employed for polymer synthesis:

|  | Wt/Grams | Wt. % |
|---|---|---|
| Butyl methacrylate | 127.5 | 17 |
| Ethylhexyl acrylate | 180 | 24 |
| Glycidyl methacrylate | 195 | 26 |
| Methyl methacrylate | 210 | 28 |
| Styrene | 37.5 | 5 |

Thirty-seven (37) grams of tert-butyl perbenzoate is added to the above monomers and the resulting solution added dropwise to refluxing methyl amyl ketone over a period of one hour and ten minutes. The heating and stirring is continued for half an hour after the addition is complete and then two more grams t-butyl perbenzoate are added portionwise. The reaction mixture is refluxed for two more hours and then allowed to cool to room temperature. The molecular weight of the copolymer is determined by Gel Permeation Chromatography and found to be $\overline{M}_n=3250$ and $\overline{M}_w/\overline{M}_n=2.2$. The calculated Tg of the polymer is 9°C and the solution viscosity (#4 Ford cup) is 41 seconds.

Fifty parts of the above polymer solution are mixed with 94 parts the reactive catalyst reaction product mixture from Example 1, 28.5 parts of Cymel 301 and 40 parts of n-butyl acetate. The resulting formulation is applied by spraying to primed steel panels and is baked at 130°C for 20 minutes to obtain glossy coating with excellent hardness and adhesion.

Example 3
    An acrylic copolymer is prepared from the following monomers:

|  | Parts by Weight |
|---|---|
| Butyl methacrylate | 26 |
| Ethylhexyl acrylate | 20 |
| Hydroxyethyl acrylate | 30 |
| Styrene | 24 |

The preparation is carried out in the same way as outlined in Example 1 by using cellusolve acetate as the solvent and tert-butyl peroctoate (5% of monomers) as initiator to obtain a 70% solution of the polymer. The calculated Tg is −7°C and the molecular weight from Gel Permeation Chromatography is $\overline{M}_n=3070$ and $\overline{M}_w/\overline{M}_n=2.2$.

Four hundred (400) grams of this polymer solution are mixed with 100 grams of cellusolve acetate and the solution is heated to 50°C. Thirty-five (35) grams of phosphorus pentoxide are added portionwise (5 hours) with continuous stirring and maintaining the temperature at 60°C. After the addition is complete, the reaction mixture is heated for one hour at 60°C and then it is filtered through a coarse filtering paper. From sodium hydroxide titration, the acid equivalent weight is found to be 786. Gel Permeation Chromatography shows its molecular weight ($\overline{M}n$) to be 3102 (d=2.5).

Fifty (50) parts of the above reactive catalyst reaction product mixture are mixed with 48 parts of the hydroxy polymer solution from Example 1, 14.5 parts Cymel 301, 15 parts butyl acetate and the resulting formulation is spray applied to primed steel panels. The panels are baked at 130°C for 25 minutes to obtain a hard, glossy coating with excellent adhesion and impact strength.

Example 4

By following the procedure described in Example 2, a copolymer is prepared from the following monomers:

|  | Wt. % |
| --- | --- |
| Butyl methacrylate | 49 |
| Glycidyl methacrylate | 20 |
| Hydroxypropyl methacrylate | 10 |
| Methyl methacrylate | 16 |
| Styrene | 5 |

The calculated Tg of the copolymer is 43°C and solids content is found to be 52%. The molecular weight, by Gel Permeation Chromatography, is found to be $\overline{M}n$=2904 and $\overline{M}w/\overline{M}n$=2.31.

Fifteen (15) parts of the above polymer solution are mixed with 2.2 parts Cymel 301, 8.6 parts of the reactive catalyst reaction product mixture from Example 3 and 5.2 parts of methyl amyl ketone. The resulting formulation is drawn on a steel panel with Bondrite treatment and is baked at 130°C for 20 minutes to obtain glossy coating with excellent hardness and adhesion.

Example 5

Reactive catalyst reaction product mixture, 7.9 parts, from Example 3 is mixed with 2.8 parts Cymel 301, 2.1 parts Araldite CY-178 and 4 parts of butyl acetate. The resulting formulation is drawn on a primed steel panel and is baked at 130°C for 20 minutes to obtain a hard, glossy (95/20°) film with excellent solvent resistance (xylene and methyl ethyl ketone) and adhesion.

Example 6

Fifteen parts of glycidyl methacrylate polymer from Example 4, six parts Cymel 301; and 8.6 parts of reactive catalyst reaction product mixture from Example 3 are dissolved in 7.5 parts of methyl amyl ketone. The resulting formulation is drawn on a primed steel panel and is baked at 130°C for 25 minutes to obtain a coating with excellent hardness, adhesion and solvent resistance.

Example 7

Two parts of bis-(hydroxypropyl) azelate is added to the formulation described in Example 6 and the panels are baked in the same manner to obtain coatings with excellent gloss, hardness, adhesion and solvent (xylene and methyl ethyl ketone) resistance.

Example 8

Seventy-five parts of the glycidyl polymer described in Example 4, 30 parts of Cymel 301 and 43 parts of reactive catalyst mixture from Example 4 are dissolved in 10 parts of methyl amyl ketone. The formulation is applied by spraying to primed steel panels in three coats. The panels are baked at 110°C for 20 minutes to obtain coatings with excellent physical properties.

Example 9

In the formulation described in Example 5, three parts of benzoguanamine resin Cymel 1123 is substituted for Cymel 301. The resulting formulation is drawn on primed steel panels and is baked at 120°C for 20 minutes to obtain coatings with excellent hardness, adhesion and solvent (xylene and methyl ethyl ketone) resistance.

Example 10

Ten parts of glycoluril resin Cymel 1170 are substituted for Cymel 301 in Example 6 and two parts of 2 - ethyl - 1,3 - hexanediol are added to the resulting formulation. The solution is drawn on primed steel panels and is baked at 130°C for 20 minutes to obtain coatings with excellent hardness, adhesion and solvent (xylene and methyl ethyl ketone) resistance.

Example 11

Thirty-five parts of urea resin Beetle 80 are substituted for Cymel 301 in Example 2 and 4 parts of 1,4 - benzenedimethanol are added to it. The resulting formulation is applied by spraying to primed steel panels and is baked at 136°C for 20 minutes to obtain coating with excellent hardness, adhesion and gloss.

Example 12

A copolymer is prepared from the following monomers by following the procedure described in Example 1(a).

|  | Wt. % |
| --- | --- |
| Butyl methacrylate | 50 |
| Ethylhexyl acrylate | 10 |
| Glycidyl methacrylate | 15 |
| Hydroxypropyl methacrylate | 10 |
| Methyl methacrylate | 10 |
| Styrene | 5 |

Toluene is used as solvent to obtain a 60% solution of the polymer; tert-butyl peroctoate (3.7% of monomers) is used as an initiator. Toluene (60%) is distilled off and butyl acetate is added to bring the solids level to 60% by weight. The calculated Tg of the polymer is 25°C and the molecular weight by Gel Permeation Chromatography is found to be $\overline{M}n=5301$, $\overline{M}w/\overline{M}n=2.9$.

Three hundred (300) parts of this polymer solution are mixed well with 10.69 parts of aluminum flakes (65% in naphtha), 3.40 parts of zinc naphthanate, and 92 parts of hexamethoxymethyl melamine (Cymel 301) are added to this mixture. 152 parts of the reactive catalyst mixture from Example 3 and 40 parts of bis-(hydroxypropyl) azelate are dissolved in 50 ml of cellusolve acetate; this solution is added to the above mixture and the resulting formulation applied by spraying to primed steel panels in three coats. The panels are baked at 130°C for 20 minutes to obtain silver metallic coatings with excellent physical properties.

Example 13

A millbase is prepared by dispensing titanium dioxide in the polymer solution described in Example 12 with a high speed Cowl's blade. The composition of the millbase is: 15% polymer (100% nonvolatile), 65% titanium dioxide and 20% methyl amyl ketone. Seventy-two (72) parts of this millbase, 31 parts of the polymer solution from Example 12, 12.5 parts of bis-(hydroxypropyl) azelate, 34 parts of Cymel 301 and 29 parts of methyl amyl ketone are taken up in a plastic bottle. Twenty-five (25) parts of reactive catalyst mixture from Example 3 are added to the above mixture and the resulting formulation spray applied to both primed and unprimed steel panels. The panels are baked at 120°C for 20 minutes to obtain hard, glossy coatings with excellent adhesion. The coating has an excellent solvent and humidity resistance.

Example 14

Three hundred fifty (350) parts of TiO$_2$ are mixed with 350 parts of Acryloid OL-42 (Rohm & Haas Chem. Co.) and 25 parts of n-butyl acetate. The above mixture is taken up in a porcelain bottle containing porcelain beads and put on a roller mill for 16 hours. Thirty-one (31) parts of this mill base are mixed with 10 parts of hydroxy ester Desmophen KL5-2330 (Rohm & Haas Chem. Co.), 5 parts of 1,4-butanediol diglycidyl ether and 16 parts of Cymel 301. In a separate flask 5 parts of Desmophen KL5-2330 are mixed with 40 parts of reactive catalyst mixture from Example 3. The above two solutions are mixed together and the resulting formulation sprayed on primed panels in a four coat application (thickness 3.23.9 mil) with an intermediate flash of 1.25 minutes. After 5 minutes final flash the panels are baked at 125°C for 20 minutes to obtain a glossy (95/20°) coating with excellent xylene and methyl ethyl ketone resistance. The solids by weight are determined (130°C/30 min) to be 71%.

Example 15

Five hundred (500) parts of TiO$_2$ and 250 parts of Ferrite yellow are mixed with 500 parts of Acryloid OL-42, 7.8 parts of dispersing agent BYK P 104S (Mellinckrodt) and 200 parts of n-butyl acetate; the mill base is prepared as described in Example 14.

Fifty parts of the above mill base are mixed with 25 parts Acryloid OL-42, 3 parts of bis-(hydroxypropyl)-azelate, 20 parts of Cymel 301 and 10 parts of butyl acetate. Five parts of reactive catalyst mixture from Example 1 are added to the above mixture and the resulting formulation is applied by spraying to primed steel panels. The panels were baked at 130°C for 20 minutes to obtain coatings with excellent hardness, adhesion and gloss.

Example 16

In a three-necked, round bottom, two liter flask, equipped with a stirrer, a condenser and a dropping funnel, 750 ml of toluene is brought to reflux under nitrogen. The following mixture of monomers, containing 15 grams of 2,2' - azobis - (2 - methyl propionitrile) dissolved in 50 ml acetone, is added dropwise to the refluxing toluene.

|  | Wt./Grams | Wt. % |
| --- | --- | --- |
| Butyl methacrylate | 150 | 50 |
| Glycidyl methacrylate | 45 | 15 |
| Hydroxypropyl methacrylate | 30 | 10 |
| Methyl methacrylate | 60 | 20 |
| Styrene | 15 | 5 |

The addition of the initiator and monomer solution is completed in three hours. The reaction mixture is refluxed for half an hour more and 10 ml of acetone solution of 2 grams of the above initiator is added dropwise and the reaction mixture refluxed for half an hour. Part of the solvent is distilled out to bring the solids content to 66% by weight.

Fifty (50) parts of the above polymer solution and 33 parts of Cymel 301 are dissolved in 27 parts of n-butyl acetate and 55.4 parts of the reactive catalyst reaction product mixtures from Example 1 are added to the above solution. The resulting formulation is applied by spraying to primed steel panels which are baked at 135°C for 20 minutes to obtain hard glossy coating with excellent adhesion and solvent resistance.

Example 17

A copolymer is prepared by following the procedure described in Example 16 in methyl amyl ketone at 125°C using the following monomers:

|  | Wt. % |
| --- | --- |
| Butyl methacrylate | 50 |
| Ethylhexyl acrylate | 10 |
| Glycidyl methacrylate | 15 |
| Hydroxypropyl methacrylate | 10 |
| Methyl methacrylate | 10 |
| Styrene | 5 |

Tert-butyl peroctoate (5.25% of monomers) is used as initiator and determined solids content is 56.6% by weight. The calculated Tg of the copolymer is 25°C and the molecular weight from Gel Permeation Chromatography is found to be $\bar{M}n=4220$ and $\bar{M}_w/\bar{M}_n=1.90$.

A millbase is prepared by dispensing titanium dioxide in the polymer (b) with a high speed Cowl's blade. The composition of the millbase is: 15% polymer (100% nonvolatile), 65% titanium dioxide and 20% methyl amyl ketone. Seventy-five (75) parts of this millbase, 10 parts of bis-(hydroxypropyl) azelate and 22 parts Cymel 301 are mixed with 15 parts of n-butyl acetate and 19.1 parts of the reactive catalyst reaction product mixture from Example 1 are added to this mixture. The resulting formulation is applied by spraying to primed steel panels which are baked at 140°C/20 minutes to obtain coating with excellent hardness, adhesion and solvent (xylene and methyl ethyl ketone) resistance.

Example 18

By following the procedure described in Example 16 a copolymer is prepared in refluxing methyl amyl ketone from the following monomers:

|  | Wt. % |
| --- | --- |
| Glycidyl methacrylate | 20 |
| Hydroxyethyl acrylate | 10 |
| Butyl methacrylate | 60 |
| Styrene | 10 |

Two percent tert-butyl peroctoate is used as initiator; the solids content is found to be 53.6%. From Gel Permeation Chromatography the molecular weight of the polymer is found to be: $\bar{M}n=2746$ and $\bar{M}w/\bar{M}n=2.33$.

As described in Example 20, a millbase is prepared with the following ingredients:

# 0 013 825

| | Wt. % |
|---|---|
| Titanium dioxide | 56 |
| The above Polymer | 26 (100% nonvolatile) |
| Methyl amyl ketone | 18 |

Seventy-one (71) parts of this millbase, 7 parts bis-(hydroxypropyl) azelate, 27 parts Cymel 301, 15 parts methyl amyl ketone and 20.9 parts of the reactive catalyst reaction product from Example 3 are mixed in a plastic container. This formulation is spray applied to primed test panels. The panels are baked at 130°C for 20 minutes to obtain glossy, hard coatings with excellent solvent (xylene and methyl amyl ketone) resistance.

Example 19

By following the procedure described in Example 16, a copolymer is prepared from the following monomers:

| | Wt. % |
|---|---|
| Butyl methacrylate | 40 |
| Glycidyl acrylate | 20 |
| Hydroxypropyl methacrylate | 10 |
| Methyl methacrylate | 20 |
| Styrene | 10 |

The solids content in methyl amyl ketone is determined to be 55% by weight.

Thirty-nine (39) parts of the above polymer solution and 17 parts of Cymel 301 are dissolved in 15 parts of n-butyl acetate. The reactive catalyst reaction product mixture (26.8 parts) from Example 3 is added to the above solution and the resulting formulation is applied by spraying to primed steel panels. The panels are baked at 140°C for 20 minutes to obtain coatings with excellent hardness, adhesion and solvent (xylene and methyl ethyl ketone) resistance.

Example 20

One hundred and twenty (120) parts of the GMA/OH polymer solution prepared in Example 12 are mixed well with 5.1 parts of aluminum flakes (65% in naphtha), 1.2 parts of zinc naphthenate and 44 parts of Cymel 301 are added to this mixture. Reactive catalyst reaction product mixture (61 parts) from Example 3 is dissolved in 25 parts of n-butyl acetate and is added to the above mixture. The resulting formulation is applied spraying in three coats to primed steel panels which are baked at 135°C for 20 minutes to obtain silver metallic coatings with excellent hardness, adhesion and solvent (xylene and methyl ethyl ketone) resistance.

Example 21

The following monomers are utilized in the synthesis of a glycidyl methacrylate polymer.

| | Weight/Grams | Wt. % |
|---|---|---|
| Butyl methacrylate | 120 | 16 |
| Ethylhexyl acrylate | 142.5 | 19 |
| Glycidyl methacrylate | 195 | 26 |
| Methyl methacrylate | 255 | 34 |
| Styrene | 37.5 | 5 |

The polymerization is carried out as outlined in Example 2 by employing 500 grams of methyl amyl ketone and 30 grams of tert-butyl perbenzoate. The addition of initiator and the monomer mixture is complete in two hours and the reaction mixture refluxed for one additional hour. Two grams of initiator are then added and the reaction mixture refluxed for two hours. The molecular weight determined by Gel Permeation Chromatography is found to be $\overline{M}_n=3168$ and $\overline{M}w/\overline{M}_n=2.15$. The Tg of this polymer is calculated to be 20°C.

Sixty parts of this polymer solution, 54 parts of Cymel 301, 9 parts of aluminum flakes (65% in naphtha), 41 parts of n-butyl acetate and 112 parts of the reactive catalyst reaction product mixture from Example 1 are added to the above mixture. The resulting formulation is applied by spraying in three coats to primed test panels which are baked at 135°C/20 minutes to obtain silver metallic coating with excellent hardness, adhesion and solvent (xylene and methyl ethyl ketone) resistance.

Example 22

Fifty (50) parts of the reactive catalyst reaction product mixture from Example 1, are mixed with eleven parts of Cymel 301, 5 parts of Epon 828 (Shell Chem. Co.) and 10 parts of butyl acetate. The resulting formulation is applied by spraying to primed steel panels which are baked at 130°C/20 minutes to obtain coatings with excellent gloss, hardness, adhesion and solvent (xylene and methyl ethyl ketone) resistance.

Example 23

Fifty (50) parts of Phthalo Blue pigment are mixed with 500 parts of Acryloid OL-42 and 44 parts of n-butyl acetate and this mixture is ground in a pebble mill for 24 hours.

Twenty-five (25) parts of the above millbase are mixed with 28 parts of the reactive catalyst reaction product mixture from Example 1, 3 parts Epon 828, 27 parts of Cymel 301, 4.8 parts of aluminum flakes (65% in naphtha) and 9 parts of n-butyl acetate. The resulting formulation is sprayed on primed panels in three coats with one minute flash times between coats. After five minutes final flash, the panels are baked at 130°C for 20 minutes to obtain blue metallic coatings with excellent hardness, adhesion and solvent resistance.

Example 24

Sixty (60) parts of the hydroxy functional acrylic organophosphate reactive catalyst prepared in Example 3 are mixed with 23 parts of Cymel 301, 15 parts of Araldite CY-178 and 18 parts of n-butyl acetate. This mixture is well shaken and spray applied to primed steel test panels. The panels are baked at 130°C for 25 minutes to obtain a coating with excellent hardness, adhesion and solvent (xylene and methyl ethyl ketone) resistance.

Example 25

Three hundred and fifty (350) parts of $TiO_2$ are mixed with 350 parts of Acryloid OL-42 (Rohm and Haas Chem. Co.) and 25 parts of n-butyl acetate. The above mixture is taken up in a porcelain bottle containing porcelain beads and put on a roller mill for 16 hours. Forty (40) parts of this millbase are mixed with 5 parts of hydroxy ester Desmophen KL5-2330 (Rohm and Haas Chem. Co.), 3 parts of Araldite CY-178, 12 parts of Cymel 301, 10.5 parts of the reactive catalyst reaction product from Example 3 and 15 parts of n-butyl acetate. The resulting formulation is applied by spraying to primed steel panels which are baked at 140°C for 20 minutes to obtain coatings with excellent physical properties.

## Claims

1. A thermosetting coating composition comprising a film-forming component and an amino compound, which composition cures by reaction between said amino compound and hydroxy functionality present on said film-forming material, characterised in that the composition includes a hydroxy functional acrylic organophosphate reactive catalyst comprising the reaction product of:

(1) a hydroxy functional acrylic copolymer which (a) has a number average molecular weight ($\overline{M}_n$) of between 1500 and 6000 and a glass transition temperature between —25°C and 70°C, and (b) bears between 2 and 10 pendent hydroxy groups per molecule; and

(2) sufficient phosphorus pentoxide to produce a reaction product having an acid equivalent weight of between 500 and 3000.

2. A composition in accordance with Claim 1 wherein said film-forming material has a number average molecular weight of at least 150.

3. A composition in accordance with Claim 1 or Claim 2 wherein said film-forming material comprises a compound bearing hydroxy functionality.

4. A composition in accordance with any one of Claims 1 to 3 wherein said film-forming material comprises a compound which reacts in situ during cure of said composition to form hydroxy functionality.

5. A composition in accordance with Claim 4 wherein said reaction in situ forms substantially all of the crosslinking functionality in said film-forming material.

6. A composition in accordance with Claim 4 wherein said film-forming material includes hydroxy functionality in addition to that which is formed by said reaction in situ.

7. A composition in accordance with any one of Claims 4 to 6 wherein said compound bears epoxy functionality which reacts with said hydroxy functional acrylic organophosphate reactive catalyst during cure of said composition to form hydroxy functionality.

8. A composition in accordance with any one of Claims 1 to 7 wherein said film-forming material consists essentially of a compound bearing both epoxy and hydroxy functionality.

9. A composition in accordance with any one of Claims 1 to 7 wherein said film-forming material consists essentially of a mixture of a compound bearing hydroxy functionality and a compound bearing epoxy functionality.

10. A composition in accordance with any one of Claims 1 to 9 wherein said film-forming material comprises a copolymer bearing pendent hydroxy functionality, having a number average molecular weight ($\overline{M}_n$) of between 1000 and 20,000 and a glass transition temperature (Tg) of between —25°C and 70°C, said copolymer consisting of between 5 and 30 weight percent of monoethylenically unsaturated monomers bearing hydroxy functionality and between 95 and 70 weight percent of other monoethylenically unsaturated monomers.

11. A composition according to any one of Claims 1 to 9 wherein said film-forming material comprises a copolymer bearing pendent epoxy functionality, having a number average molecular weight ($\overline{M}_n$) of between 1500 and 10,000 and a glass transition temperature (Tg) of between —25°C and 70°C, said copolymer consisting of between 10 and 30 weight percent of monoethylenically unsaturated monomers bearing glycidyl functionality and between 90 and 70 weight percent of other monoethylenically unsaturated monomers.

12. A composition according to any one of Claims 1 to 10 wherein the film-forming material comprises a bifunctional copolymer bearing hydroxy functionality and pendent epoxy functionality, having a number average molecular weight ($\overline{M}_n$) of between 1500 and 10,000 and a glass transition temperature (Tg) of between —25°C and 70°C, said copolymer consisting essentially of (i) between 5 and 25 weight percent of monoethylenically unsaturated monomers bearing glycidyl functionality and between 5 and 25 weight percent of monoethylenically unsaturated monomer bearing hydroxy functionality, with the total of said glycidyl and hydroxy functional monomers being not greater than 30 weight percent of the monomers in said bifunctional copolymer and (ii) between 90 and 70 weight percent of other monoethylenically unsaturated monomers.

13. A composition in accordance with Claim 11 or 12 wherein said monoethylenically unsaturated monomers bearing glycidyl functionality in said bifunctional copolymer are glycidyl esters or glycidyl ethers.

14. A composition in accordance with Claim 13 wherein said monoethylenically unsaturated monomers bearing glycidyl functionality are glycidyl esters of monoethylenically unsaturated carboxylic acids.

15. A composition in accordance with any one of Claims 10 to 14 wherein said monoethylenically unsaturated monomers bearing hydroxy functionality are hydroxyalkyl acrylates formed by the reaction of $C_2$—$C_3$ dihydric alcohols and acrylic or methacrylic acids.

16. A composition in accordance with any one of Claims 10 to 15 wherein said other monoethylenically unsaturated monomers in said copolymer are acrylates or other monoethylenically unsaturated vinyl monomers.

17. A composition in accordance with Claim 16 wherein said acrylate monomers comprise at least 50 weight percent of the total monomers in said copolymer and are esters of $C_1$—$C_{12}$ monohydric alcohols and acrylic or methacrylic acids.

18. A composition in accordance with any one of Claims 1 to 9 wherein the film-forming material comprises a polyepoxide resin having a number average molecular weight ($\overline{M}_n$) of between 140 and 3000.

19. A composition in accordance with Claim 18 wherein said polyepoxide resin is an aliphatic, cycloaliphatic or aromatic polyepoxide having a number average molecular weight of between 300 and 2000.

20. A composition according to any one of Claims 10 to 19 further comprising an hydroxy-functional additive having a number average molecular weight of between 150 and 6000.

21. A composition in accordance with Claim 20 wherein said hydroxy functional additive comprises (i) an hydroxy functional polyester, (ii) an hydroxy functional polyether, (iii) an hydroxy functional oligoester, (iv) a monomeric polyol, (v) an hydroxy functional copolymer formed from monoethylenically unsaturated monomers, one or more of which bears hydroxy functionality and which is included in said copolymer in amounts ranging from 10 to 30 weight percent of said copolymer, or (vi) mixture of two or more of (i)—(v).

22. A composition in accordance with any one of Claims 11 to 21 wherein said hydroxy functional acrylic organophosphate reactive catalyst is included in said composition in an amount sufficient to provide between 1.0 and 1.2 equivalents of acid functionality for each equivalent of epoxy functionality on said copolymer.

23. A composition in accordance with any one of the preceding claims containing 50% by weight, or more, of non-volatile solids.

24. A thermosetting coating composition in accordance with Claim 1 which is adapted for low temperature bake applications, which contains greater than 50% by weight of nonvolatile solids, and which, exclusive of pigments, solvents and other non-reactive components, consists essentially of:—

(A) a copolymer bearing pendent epoxy functionality, having a number average molecular weight ($\overline{M}_n$ of between 1500 and 10,000 and a glass transition temperature (Tg) of between —25°C and 70°C, said copolymer consisting of between 10 and 30 weight percent of monoethylenically unsaturated monomers bearing glycidyl functionality and between 90 and 70 weight percent of other monoethylenically unsaturated monomers;

(B) said hydroxy functional acrylic organophosphate reactive catalyst;

# 0 013 825

(C) an amino resin crosslinking agent; and
(D) up to 45 weight percent based on the total weight of (A), (B), (C) and (D) of a hydroxy functional additive having a number average molecular weight ($\overline{M}_n$) of between 150 and 6000,

said hydroxy functional acrylic organophosphate reactive catalyst being included in said composition in an amount sufficient to provide between .9 and 1.5 equivalents of acid functionality for each equivalent of pendent epoxy functionality of said copolymer, and said amino resin crosslinking agent being included in said composition in an amount sufficient to provide at least 0.4 equivalents of nitrogen crosslinking functionality for each equivalent of hydroxy functionality included in said composition either as (i) an organic hydroxyl group on said hydroxy functional acrylic organophosphate reactive catalyst, (ii) a hydroxy group on said hydroxy functional additive, or (iii) as a result of esterification of said pendent epoxy functionality of said copolymer during cure of said coating composition.

25. A thermosetting coating composition in accordance with Claim 1 which is adapted for low temperature bake applications, which contains greater than 50% by weight of nonvolatile solids, and which, exclusive of pigments, solvents and other nonreactive components, consists essentially of:

(A) a bifunctional copolymer bearing hydroxy functionality and pendent epoxy functionality, having a number average molecular weight ($\overline{M}_n$) of between 1500 and 10,000 and a glass transition temperature (Tg) of between −25°C and 70°C, said copolymer consisting essentially of (i) between 5 and 25 weight percent of monoethylenically unsaturated monomers bearing glycidyl functionality and between 5 and 25 weight percent of monoethylenically unsaturated monomer bearing hydroxy functionality, with the total of said glycidyl and hydroxy functional monomers being not greater than 30 weight percent of the monomers in said bifunctional copolymer and (ii) between 90 and 70 weight percent of other monoethylenically unsaturated monomers;
(B) said hydroxy functional acrylic organophosphate reactive catalyst;
(C) an amino resin crosslinking agent; and
(D) up to 45 weight percent based on the total weight of (A), (B), (C) and (D) of an hydroxy functional additive having a number average molecular weight ($\overline{M}_n$) of between 150 and 6000, said hydroxy functional acrylic organophosphate reactive catalyst being included in said composition in an amount sufficient to provide between .9 and 1.5 equivalents of acid functionality for each equivalent of pendent epoxy functionality on said bifunctional copolymer, and said amino resin crosslinking agent being included in said composition in an amount sufficient to provide at least .4 equivalent of nitrogen crosslinking functionality for each equivalent of hydroxy functionality. Included in said composition either as (i) an organic hydroxyl group on said organophosphate ester, (ii) an hydroxy group on said bifunctional copolymer, (iii) an hydroxyl group on said hydroxy functional additive or (iv) as a result of esterification of said pendent epoxy functionality of said bifunctional copolymer during cure of said coating composition.

26. A thermosetting coating composition in accordance with Claim 1 which is adapted for low temperature bake applications which contains greater than 50% by weight of nonvolatile solids, and which, exclusive of pigments, solvents and other nonreactive components, consists essentially of:

(A) a polyepoxide resin having a number average molecular weight ($\overline{M}_n$) of between 140 and 3000;
(B) said hydroxy functional acrylic organophosphate reactive catalyst;
(C) an amino resin crosslinking agent; and
(D) up to 45 weight percent based on the total weight of (A), (B), and (C) of a hydroxy functional additive having a number average molecular weight ($\overline{M}_n$) of between 140 and 3000, said hydroxy functional acrylic organophosphate ester being included in said composition in an amount sufficient to provide between .9 and 1.5 equivalents of epoxy functionality on said polyepoxide resin, and said amino resin crosslinking agent, and said agent being included in said composition, in an amount sufficient to provide at least 0.4 equivalent of nitrogen crosslinking functionality for each equivalent of hydroxy functionality. Included in said composition either as (i) an organic hydroxyl group on said hydroxy functional acrylic organophosphate reactive catalyst, (ii) an hydroxyl group on said hydroxy functional additive, or (iii) as a result of esterification of said epoxy functionality on said polyepoxide resin during cure of said coating composition.

27. A composition in accordance with any one of the preceding Claims wherein said amino resin crosslinking agent is an amine-aldehyde resin selected from condensation products of formaldehyde with melamine, substituted melamine, urea, benzoguanamine, and substituted benzoguanamine, and mixtures of said condensation products, and is included in an amount sufficient to provide between .6 and 2.1 equivalents of nitrogen crosslinking of functionality per equivalent of hydroxy functionality.

**Revendications**

1. Composition de revêtement thermodurcissable comprenant un constituant filmogène et un

16

**0 013 825**

composé aminé, laquelle composition durcit par réaction entre le composé aminé et la fonctionnalité hydroxyle présente sur cette matière filmogène, caractérisée en ce qu'elle comprend un organophosphate acrylique catalytique réactif à fonctions hydroxyle qui comprend le produit de réaction:

(1) d'un copolymère acrylique à fonctions hydroxyle qui (a) a un poids moléculaire moyen en nombre ($\overline{M}_n$) entre 1500 et 6000 et une température de transition vitreuse entre −25°C et 70°C, et (b) porte entre 2 et 10 radicaux hydroxyle pendants par molécule, et

(2) de suffisamment de pentoxyde de phosphore pour former un produit de réaction ayant un poids équivalent d'acide entre 500 et 3000.

2. Composition suivant la revendication 1, dans laquelle la matière filmogène a un poids moléculaire moyen en nombre d'au moins 150.

3. Composition suivant la revendication 1 ou 2, dans laquelle la matière filmogène comprend un composé portant la fonctionnalité hydroxyle.

4. Composition suivant l'une quelconque des revendications 1 à 3, dans laquelle la matière filmogène comprend un composé qui réagit in situ pendant le durcissement de la composition pour former la fonctionnalité hydroxyle.

5. Composition suivant la revendication 4, dans laquelle la réaction in situ forme sensiblement toute la fonctionnalité de réticulation dans la matière filmogène.

6. Composition suivant la revendication 4, dans laquelle la matière filmogène comprend de la fonctionnalité hydroxyle en plus de celle formée par la réaction in situ.

7. Composition suivant l'une quelconque des revendications 4 à 6, dans laquelle le composé porte de la fonctionnalité époxyde qui réagit avec l'organophosphate acrylique catalytique réactif à fonctions hydroxyle pendant le durcissement de la composition pour former de la fonctionnalité hydroxyle.

8. Composition suivant l'une quelconque des revendications 1 à 7, dans laquelle la matière filmogène consiste essentiellement en un composé portant de la fonctionnalité tant époxyde qu'hydroxyle.

9. Composition suivant l'une quelconque des revendications 1 à 7, dans laquelle la matière filmogène consiste essentiellement en un mélange d'un composé portant de la fonctionnalité hydroxyle et d'un composé portant de la fonctionnalité époxyde.

10. Composition suivant l'une quelconque des revendications 1 à 9, dans laquelle la matière filmogène comprend un compolymère portant de la fonctionnalité hydroxyle pendante, ayant un poids moléculaire moyen en nombre ($\overline{M}_n$) entre 1000 et 20,000 et une température de transition vitreuse ($T_g$) entre −25°C et 70°C, ce copolymère consistant en 5 à 30% en poids de monomères monoéthyléniquement insaturés portant de la fonctionnalité hydroxyle et en 95 à 70% en poids d'autres monomères monoéthyléniquement insaturés.

11. Composition suivant l'une quelconque des revendications 1 à 9, dans laquelle la matière filmogène comprend un copolymère portant de la fonctionnalité époxyde pendante, ayant un poids moléculaire moyen en nombre ($\overline{M}_n$) entre 1500 et 10.000 et une température de transition vitreuse ($T_g$) entre −25°C et 70°C, ce copolymère consistant en 10 à 30% en poids de monomères monoéthyléniquement insaturés portant de la fonctionnalité glycidyle et en 90 à 70% en poids d'autres monomères monoéthyléniquement insaturés.

12. Composition suivant l'une quelconque des revendications 1 à 10, dans laquelle la matière filmogène comprend un copolymère bifonctionnel portant de la fonctionnalité hydroxyle et de la fonctionnalité époxyde pendante, ayant un poids moléculaire moyen en nombre ($\overline{M}_n$) entre 1500 et 10.000 et une température de transition vitreuse ($T_g$) entre −25°C et 70°C, ce copolymère consistant essentiellement (i) en 5 à 25% en poids de monomères monoéthyléniquement insaturés portant de la fonctionnalité glycidyle et 5 à 25% en poids de monomères monoéthyléniquement insaturés portant de la fonctionnalité hydroxyle, le total de ces monomères à fonctions glycidyle et hydroxyle n'étant pas supérieur à 30% du poids des monomères dans le copolymère bifonctionnel, et (ii) en 90 à 70% en poids d'autres monomères monoéthyléniquement insaturés.

13. Composition suivant la revendication 11 ou 12, dans laquelle les monomères monoéthyléniquement insaturés portant de la fonctionnalité glycidyle dans le copolymère bifonctionnel sont des esters glycidyliques ou des éthers glycidyliques.

14. Composition suivante la revendication 13, dans laquelle les monomères monoéthyléniquement insaturés portant de la fonctionnalité glycidyle sont des esters glycidyliques d'acides carboxyliques monoéthyléniquement insaturés.

15. Composition suivant l'une quelconque des revendications 10 à 14, dans laquelle les monomères monoéthyléniquement insaturés portant de la fonctionnalité hydroxyle sont des acrylates d'hydroxyalcoyle formés par réaction d'alcools dihydroxylés en $C_2$—$C_3$ et d'acide acrylique ou méthacrylique.

16. Composition suivant l'une quelconque des revendications 10 à 15, dans laquelle les autres monomères monoéthyléniquement insaturés du copolymère sont des acrylates ou d'autres monomères vinyliques monoéthyléniquement insaturés.

17

**0 013 825**

17. Composition suivant la revendication 16, dans laquelle les acrylátes monomères comprennent au moins 50% en poids du total des monomères dans le copolymère et sont des esters d'alcools monohydroxylés en $C_1$—$C_{12}$ et d'acide acrylique ou méthacrylique.

18. Composition suivant l'une quelconque des revendications 1 à 9, dans laquelle la matière filmogène comprend une résine polyépoxyde ayant un poids moléculaire moyen en nombre ($\overline{M}_n$) entre 140 et 3000.

19. Composition suivant la revendication 18, dans laquelle la résine polyépoxyde est une résine polyépoxyde aliphatique, cycloaliphatique ou aromatique ayant un poids moléculaire moyen en nombre entre 300 et 2000.

20. Composition suivant l'une quelconque des revendications 10 à 19 qui comprend, en outre, un additif à fonctions hydroxyle ayant un poids moléculaire moyen en nombre entre 150 et 6000.

21. Composition suivant la revendication 20, dans laquelle l'additif à fonctions hydroxyle comprend (i) un polyester à fonctions hydroxyle, (ii) un polyéther à fonctions hydroxyle, (iii) un oligoester à fonctions hydroxyle, (iv) un polyol monomère, (v) un copolymère à fonctions hydroxyle formé à partir de monomères monoéthyléniquement insaturés dont un ou plusieurs portent de la fonctionnalité hydroxyle et qui sont compris dans le copolymère en quantité s'échelonnant de 10 à 30% du ·poids du copolymère, ou (vi) un mélange de deux ou plusieurs d'entre (i) à (v).

22. Composition suivant l'une quelconque des revendications 11 à 21, dans laquelle l'organophosphate acrylique catalytique réactif à fonctions hydroxyle est compris dans la composition en une quantité suffisante pour apporter entre 1,0 et 1,2 équivalent de fonctionnalité acid par équivalent de fonctionnalité époxyde du copolymère.

23. Composition suivant l'une quelconque des revendications précédentes, qui contient 50% ou davantage de solides non volatils.

24. Composition de revêtement thermodurcissable suivant la revendication 1, qui se prête aux applications par cuisson à basse température, qui contient plus de 50% en poids de solides non volatils et qui, à l'exclusion des pigments, solvants et autres constituants non réactifs, consiste essentiellement:

(A) en un copolymère portant de la fonctionnalité époxyde pendante, ayant un poids moléculaire moyen en nombre ($\overline{M}_n$) entre 1500 et 10.000 et une température de transition vitreuse ($T_g$) entre —25°C et 70°C, ce copolymère consistant en 10 à 30% en poids de monomères monoéthyléniquement insaturés portant de la fonctionnalité glycidyle et en 90 à 70% en poids d'autres monomères monoéthyléniquement insaturés,

(B) en l'organophosphate acrylique catalytique réactif à fonctions hydroxyle,

(C) en une résine d'amine comme agent de réticulation, et

(D) en jusqu'à 45% en poids, sur base du poids total de (A), (B), (C) et (D), d'un additif à fonctions hydroxyle ayant un poids moléculaire moyen en nombre ($\overline{M}_n$) entre 150 et 6000,

l'organophosphate acrylique catalytique réactif à fonctions hydroxyle étant compris dans la composition en une quantité suffisante pour apporter entre 0,9 et 1,5 équivalent de fonctionnalité acide par équivalent de fonctionnalité époxyde pendante du copolymère et la résine d'amine comme agent de réticulation étant comprise dans la composition en une quantité suffisante pour apporter au moins 0,4 équivalent de fonctionnalité azote réticulante par équivalent de fonctionnalité hydroxyle compris dans la composition soit sous forme (i) d'un radical hydroxyle organique sur l'organophosphate acrylique catalytique réactif à fonctions hydroxyle, ou (ii) d'un radical hydroxyle sur l'additif à fonctions hydroxyle, soit (iii) en conséquence de l'estérification de la fonctionnalité époxyde pendante du copolymère pendant la durcissement de la composition.

25. Composition de revêtement thermodurcissable suivant la revendication 1, qui se prête aux applications par cuisson à basse température, qui contient plus de 50% en poids de solides non volatils et qui, à l'exclusion des pigments, solvants et autres constituants non réactifs, consiste essentiellement:

(A) en un copolymère bifonctionnel portant de la fonctionnalité hydroxyle et de la fonctionnalité époxyde pendante, ayant un poids moléculaire moyen en nombre ($\overline{M}_n$) entre 1500 et 10.000 et une température de transition vitreuse ($T_g$) entre —25°C et 70°C, ce copolymère consistant essentiellement (i) en 5 à 25% en poids de monomères monoéthyléniquement insaturés portant de la fonctionnalité glycidyle et 5 à 25% en poids de monomères monoéthyléniquement insaturés portant de la fonctionnalité hydroxyle, le total de ces monomères à fonctions glycidyle et hydroxyle n'étant pas supérieur à 30% du poids des monomères dans le copolymère bifonctionnel, et (iii) en 90 à 70% en poids d'autres monomères monoéthyléniquement insaturés,

(B) en l'organophosphate acrylique catalytique réactif à fonctions hydroxyle,

(C) en une résine d'amine comme agent de réticulation, et

(D) en jusqu'à 45% en poids, sur la base du poids total des (A), (B), (C) et (D), d'un additif à fonctions hydroxyle ayant un poids moléculaire moyen en nombre ($\overline{M}_n$) entre 150 et 6000,

l'organophosphate acrylique catalytique réactif à fonctions hydroxyle étant compris dans la composition en quantité suffisante pour apporter entre 0,9 et 1,5 équivalent de fonctionnalité acide par

18

**0 013 825**

équivalent de fonctionnalité époxyde pendante sur le copolymère bifonctionnel et la résine d'amine comme agent de réticulation étant comprise dans la composition en quantité suffisante pour apporter au moins 0,4 équivalent de fonctionnalité azote réticulante par équivalent de fonctionnalité hydroxyle comprise dans la composition soit sous forme (i) d'un radical hydroxyle organique sur l'ester organophosphorique, (ii) d'un radical hydroxyle sur le copolymère bifonctionnel, (iii) d'un radical hydroxyle sur l'additif à fonctions hydroxyle, soit (iv) en conséquence de l'estérification de la fonctionnalité époxyde pendante du copolymère bifonctionnel pendant le durcissement de la composition.

26. Composition de revêtement thermodurcissable suivant la revendication 1, qui se prête aux applications par cuisson à basse température, qui contient plus de 50% en poids de solides non volatils et qui, à l'exclusion des pigments, solvants et autres constituants non réactifs, consiste essentiellement:

(A) en une résine polyépoxyde ayant un poids moléculaire moyen en nombre ($\overline{M}_n$) entre 140 et 3000,
(B) en l'organophosphate acrylique catalytique réactif à fonctions hydroxyle,
(C) en une résine d'amine comme agent de réticulation, et
(D) en jusqu'à 45% en poids, sur base du poids total de (A), (B) et (C), d'un additif à fonctions hydroxyle ayant un poids moléculaire moyen en nombre ($\overline{M}_n$) entre 140 et 3000,

l'ester organophosphorique acrylique à fonction hydroxyle étant compris dans la composition en quantité suffisante pour apporter entre 0,9 et 1,5 équivalent de fonctionnalité époxyde sur la résine polyépoxyde, et la résine d'amine comme agent de réticulation et cet agent étant compris dans la composition en quantité suffisante pour apporter au moins 0,4 équivalent de fonctionnalité azote réticulante par équivalent de fonctionnalité hydroxyle comprise dans la composition soit sous forme (i) d'un radical hydroxyle organique sur l'organophosphate acrylique catalytique réactif à fonctions hydroxyle, (ii) d'un radical hydroxyle sur l'additif à fonctions hydroxyle, soit (iii) en conséquence de l'estérification de la fonctionnalité époxyde sur la résine polyépoxyde pendant le durcissement de la composition de revêtement.

27. Composition suivant l'une quelconque des revendications précédentes, dans laquelle la résine d'amine comme agent de réticulation est une résine amine-aldéhyde choisie parmi les produits de condensation du formaldéhyde avec la mélamine, les mélamines substituées, l'urée, la benzoguanamine et les benzoguanamines substituées, outre les mélanges de ces produits de condensation, et est comprise en une quantité suffisante pour apporter entre 0,6 et 2,1 équivalents de fonctionnalité azote réticulante par équivalent de fonctionnalité hydroxyle.

**Patentansprüche**

1. Duroplastische Ueberzugsmasse, bestehend aus einer filmbildenden Komponente und einer Aminoverbindung und härtbar durch Reaktion zwischen besagter Aminoverbindung und auf besagtem filmbildenden Material vorliegender Hydroxyfunktionalität, dadurch gekennzeichnet, dass die Masse einen hydroxyfunktionellen Acrylorganophosphat-Reaktivkatalysator enthält, der aus dem Reaktionsprodukt von

(1) einem hydroxyfunktionellen Acrylcopolymer mit (a) einem Zahlenmittelmolekulargewicht ($\overline{M}_n$) zwischen 1,500 und 6,000 sowie einer Einfriertemperatur zwischen −25°C und 70°C, das (b) zwischen 2 und 10 seitenständige Hydroxylgruppen pro Molekül aufweist, mit (2) einer zur Erzeugung eines Reaktionsprodukts mit einem Säureäquivalentgewicht zwischen 500 und 3,000 ausreichenden Menge Phosphorpentoxid, besteht.

2. Masse nach Anspruch 1, worin besagtes filmbildendes Material ein Zahlenmittelmolekulargewicht von mindestens 150 aufweist.

3. Masse nach Anspruch 1 oder 2, worin besagtes filmbildendes Material aus einer Hydroxyfunktionalität aufweisenden Verbindung besteht.

4. Masse nach einem der Ansprüche 1 bis 3, worin besagtes filmbildendes Material aus einer Verbindung besteht, die während der Härtung besagter Masse an Ort und Stelle unter Ausbildung von Hydroxyfunktionalität reagiert.

5. Masse nach Anspruch 4, worin besagte Reaktion an Ort und Stelle weitgehend die gesamte Vernetzungsfunktionalität in besagtem filmbildenden Material ausbildet.

6. Masse nach Anspruch 4, worin besagtes filmbilden des Material neben der bei besagter Reaktion an Ort und Stelle ausgebildeten noch weitere Hydroxyfunktionalität enthält.

7. Masse nach einem der Ansprüche 4 bis 6, worin besagte Verbindung Epoxifunktionalität aufweist, die während der Härtung besagter Masse mit besagtem hydroxyfunktionellen Acrylorganophosphat-Reaktivkatalysator unter Ausbildung von Hydroxyfunktionalität reagiert.

8. Masse nach einem der Ansprüche 1 bis 7, worin besagtes filmbildendes Material im wesentlichen aus einer Epoxi- sowie Hydroxyfunktionalität aufweisenden Verbindung besteht.

9. Masse nach einem der Ansprüche 1 bis 7, worin besagtes filmbildendes Material im wesentlichen aus einem Gemisch einer Hydroxyfunktionalität aufweisenden und einer Epoxifunktionalität tragenden Verbindung besteht.

10. Masse nach einem der Ansprüche 1 bis 9, worin besagtes filmbildendes Material ein seitenständige Hydroxyfunktionalität aufweisendes Copolymer mit einem Zahlenmittelmolekulargewicht ($\overline{M}_n$) zwischen 1,000 und 20,000 sowie einer Einfriertemperatur (Tg) zwischen −25°C und 70°C enthält, wobei besagtes Copolymer zwischen 5 und 30 Gew.-% aus monoäthylenisch ungesättigten, Hydroxyfunktionalität tragenden Monomeren sowie zwischen 95 und 70 Gew.-% aus weiteren monoäthylenisch ungesättigten Monomeren besteht.

11. Masse nach einem der Ansprüche 1 bis 9, worin besagtes filmbildendes Material ein seitenständige Epoxifunktionalität aufweisendes Copolymer mit einem Zahlenmittelmolekulargewicht ($\overline{M}_n$) zwischen 1,500 und 10,000 sowie einer Einfriertemperatur (Tg) zwischen −25°C und 70°C enthält, wobei besagtes Copolymer zwischen 10 und 30 Gew.-% aus monoäthylenisch ungesättigten, Glycidylfunktionalität aufweisenden Monomeren sowie zwischen 90 und 70 Gew.-% aus weiteren monoäthylenisch ungesättigten Monomeren besteht.

12. Masse nach einem der Ansprüche 1 bis 10, worin das filmbildende Material ein bifunktionelles, Hydroxy sowie seitenständige Epoxifunktionalität tragendes Copolymer mit einem Zahlenmittelmolekulargewicht ($\overline{M}_n$) zwischen 1,500 und 10,000 sowie einer Einfriertemperatur (Tg) zwischen −25°C und 70°C enthält, wobei besagtes Copolymer im wesentlichen aus (i) 5 bis 25 Gew.-% monoäthylenisch ungesättigten, Glycidylfunktionalität aufweisenden Monomeren und 5 bis 25 Gew.-% monoäthylenisch ungesättigtem, Hydroxyfunktionalität tragendem Monomer, wobei die Gesamtmenge an glycidyl- bzw. hydroxyfunktionellen Monomeren 30 Gew.-% der Monomeren in besagtem bifunktionellen Copolymer nicht übersteigt, sowie (ii) 90 bis 70 Gew.-% weiterer monoäthylenisch ungesättigter Monomere, besteht.

13. Masse nach Anspruch 11 oder 12, worin als besagte monoäthylenisch ungesättigte, Glycidylfunktionalität aufweisende Monomere in besagtem bifunktionellen Copolymer Glycidylester oder -äther vorliegen.

14. Masse nach Anspruch 13, worin als besagte monoäthylenisch ungesättigte, Glycidylfunktionalität aufweisende Monomere Glycidylester monoäthylenisch ungesättigter Carbonsäuren vorliegen.

15. Masse nach einem der Ansprüche 10 bis 14, worin als besagte monoäthylenisch ungesättigte, Hydroxyfunktionalität tragende Monomere durch Reaktion von zweiwertigen $C_2$—$C_3$-Alkoholen mit Acryl- oder Methacrylsäure gebildete Hydroxyalkylacrylate vorliegen.

16. Masse nach einem der Ansprüche 10 bis 15, worin als besagte weitere monoäthylenisch ungesättigte Monomere in besagtem Copolymer Acrylate oder andere monoäthylenisch ungesättigte Vinylmonomere vorliegen.

17. Masse nach Anspruch 16, worin besagte Acrylatmonomere mindestens 50 Gew.-% der gesamten Monomermenge in besagtem Copolymer ausmachen und es sich dabei um Ester einwertiger $C_1$—$C_{12}$-Alkohole mit Acryl- oder Methacrylsäure handelt.

18. Masse nach einem der Ansprüche 1 bis 9, worin das filmbildende Material aus einem Polyepoxidharz mit einem Zahlenmittelmolekulargewicht (Mn) zwischen 140 und 3,000 besteht.

19. Masse nach Anspruch 18, worin es sich bei besagtem Polyepoxidharz um ein aliphatisches, cycloaliphatisches oder aromatisches Polyepoxid mit einem Zahlenmittelmolekulargewicht zwischen 300 und 2,000 handelt.

20 Masse nach einem der Ansprüche 10 bis 19, die ferner ein hydroxyfunktionelles Zusatzmittel mit einem Zahlenmittelmolekulargewicht zwischen 150 und 6,000 umfasst.

21. Masse nach Anspruch 20, worin besagtes hydroxyfunktionelles Zusatzmittel aus (i) einem hydroxyfunktionellen Polyester, (ii) einem hydroxyfunktionellen Polyäther, (iii) einem hydroxyfunktionellen Oligoester, (iv) einem monomeren Polyol, (v) einem aus monoäthylenisch ungesättigten Monomeren gebildeten hydroxyfunktionellen Copolymer, wobei eines oder mehrere der Monomeren Hydroxyfunktionalität aufweist bzw. -weisen und in besagtem Copolymer in Mengen von 10 bis 30 Gew.-% bezogen auf besagtes Copolymer vorliegt bzw. -liegen, oder (vi) einem Gemisch von zwei oder mehreren aus (i)—(v) besteht.

22. Masse nach einem der Ansprüche 11 bis 21, worin der Gehalt an besagtem hydroxyfunktionellem Acrylorganophosphat-Reaktivkatalysator in besagter Masse zur Lieferung von 1,0 bis 1,2 Aequivalenten Säurefunktionalität pro Aequivalent Epoxifunktionalität an besagtem Copolymer ausreicht.

23. Masse nach einem der vorhergehenden Ansprüche, die 50 Gew.-% oder mehr an nichtflüchtigen Feststoffen enthält.

24. Duroplastische Ueberzugsmasse nach Anspruch 1 für Tieftemperatur-Einbrennanwendungen, die mehr als 50 Gew.-% nichtflüchtige Feststoffe enthält und abgesehen von Pigmenten, Lösungsmitteln sowie weiteren nicht-reaktiven Komponenten im Wesentlichen aus

(A) einem Epoxifunktionalität tragenden Copolymer mit einem Zahlenmittelmolekulargewicht ($\overline{M}_n$) zwischen 1,500 und 10,000 sowie einer Einfriertemperatur (Tg) zwischen −25°C und 70°C, wobei besagtes Copolymer zu zwischen 10 und 30 Gew.-% aus monoäthylenisch ungesättigtem Glycidyl-

**O O13 825**

funktionalität aufweisenden Monomeren sowie zu zwischen 90 und 70 Gew.-% aus weiteren monoäthylenisch ungesättigten Monomeren besteht,

(B) besagtem hydroxyfunktionellen Acrylorganophosphat-Reaktivkatalysator,

(C) einem Aminoharzvernetzungsmittel und

(D) bis zu 45 Gew.-% bezogen auf das Gesamtgewicht von (A), (B), (C) sowie (D) eines hydroxyfunktionellen Zusatzmittels mit einem Zahlenmittelmolekulargewicht (Mn) zwischen 150 und 6,000 besteht,

wobei besagter hydroxyfunktioneller Acrylorganophosphat-Reaktivkatalysator in besagter Masse mit einer zu Lieferung von jeweils 0,9 bis 1,5 Aequivalenten Säuerfunktionalität pro Aequivalent seitenständige Epoxifunktionalität des besagten Copolymers ausreichenden Menge vorliegt und der Gehalt an besagtem Aminoharzvernetzungsmittel in besagter Masse zur Lieferung von jeweils mindestens 0,4 Aequivalent Stickstoffvernetzungsfunktionalität pro Aequivalent in besagter Masse entweder als (i) organische Hydroxylgruppe am besagten hydroxyfunktionellen Acrylorganophosphat-Reaktivkatalysator, (ii) Hydroxylgruppe an besagtem hydroxyfunktionellen Zusatzmittel oder (iii) als Produkt mit während der Härtung besagter Ueberzugsmasse erfolgter Veresterung besagter seitenständiger Epoxifunktionalität des besagten Copolymers vorliegende Hydroxyfunktionalität ausreicht.

25. Duroplastische Ueberzugsmasse nach Anspruch 1 für Tieftemperatur-Einbrennanwendungen, die mehr als 50 Gew.-% nichtflüchtige Feststoffe enthält und abgesehen von Pigmenten, Lösungsmitteln sowie weiteren nicht-reaktiven Komponenten im wesentlichen aus

(A) einem bifunktionellen, Hydroxy- sowie seitenständige Epoxifunktionalität tragenden Copolymer mit einem Zahlenmittelmolekulargewicht ($\bar{M}_n$) zwischen 1,500 und 10,000 sowie einer Einfriertemperatur (Tg) zwischen −25°C und 70°C, wobei besagtes Copolymer im wesentlichen aus (i) 5 bis 25 Gew.-% monoäthylenisch ungesättigten, Glycidylfunktionalität aufweisenden Monomeren und 5 bis 25 Gew.-% monoäthylenisch ungesättigtem, Hydroxyfunktionalität tragenden Monomer, wobei die Gesamtmenge an glycidyl- bzw. hydroxyfunktionellen Monomeren 30 Gew.-% der Monomeren in besagtem bifunktionellen Copolymer nicht übersteigt, sowie (ii) 90 bis 70 Gew.-% weiterer monoäthylenisch ungesättigter Monomere besteht,

(B) besagtem hydroxyfunktionellen Acrylorganophosphat-Reaktivkatalysator,

(C) einem Aminoharzvernetzungsmittel und

(D) bis zu 45 Gew.-% bezogen auf das Gesamtgewicht von (A), (B), (C) sowie (D) eines hydroxyfunktionellen Zusatzmittels mit einem Zahlenmittelmolekulargewicht ($\bar{M}_n$) zwischen 150 und 6,000 besteht, wobei besagter hydroxyfunktioneller Acrylorganophosphat-Reaktivkatalysator in besagter Masse mit einer zur Lieferung von jeweils 0,9 bis 1,5 Aequivalenten Säuerfunktionalität pro Aequivalent seitenständige Epoxifunktionalität des besagten bifunktionellen Copolymers ausreichenden Menge vorliegt und der Gehalt an besagtem Aminoharzvernetzungsmittel in besagter Masse zur Lieferung von jeweils mindestens 0,4 Aequivalent Stickstoffvernetzungsfunktionalität pro Aequivalent in besagter Masse entweder als (i) organische Hydroxylgruppe an besagtem Organophosphatester, (ii) Hydroxylgruppe an besagtem bifunktionellen Copolymer, (iii) Hydroxylgruppe an besagtem hydroxyfunktionellen Zusatzmittel oder (iv) als Produkt mit während der Härtung besagter Ueberzugsmasse erfolgter Veresterung besagter seitenständiger Epoxifunktionalität des besagten bifunktionellen Copolymers vorliegender Hydroxyfunktionalität ausreicht.

26. Duroplastische Ueberzugsmasse nach Anspruch 1 für Tieftemperatur-Einbrennanwendungen, die mehr als 50 Gew.-% nichtflüchtige Festoffe enthält und abgesehen von Pigmenten, Lösungsmitteln sowie weiteren nicht-reaktiven Komponenten im wesentlichen aus

(A) einem Polyepoxidharz mit einem Zahlenmittelmolekulargewicht ($\bar{M}_n$) zwischen 140 und 3,000,

(B) besagtem hydroxyfunktionellen Acrylorganophosphat-Reaktivkatalysator,

(C) einem Aminoharzvernetzungsmittel und

(D) bis zu 45 Gew.-% bezogen auf das Gesamtgewicht von (A), (B) und (C) eines hydroxyfunktionellen Zusatzmittels mit einem Zahlenmittelmolekulargewicht ($\bar{M}_n$) zwischen 140 und 3,000 besteht, wobei besagter hydroxyfunktioneller Acrylorganophosphatester in besagter Masse mit einer zur Lieferung von 0,9 bis 1,5 Aequivalenten Epoxifunktionalität an besagtem Polyepoxidharz und besagtem Aminoharzvernetzungsmittel ausreichenden Menge vorliegt und der Gehalt an besagtem Aminoharzvernetzungsmittel in besagter Masse zur Lieferung von mindestens 0,4 Aequivalent Stickstoffvernetzungsfunktionalität pro Aequivalent in besagter Masse entweder als (i) organische Hydroxylgruppe am besagten hydroxyfunktionellen Acrylorganophosphat-Reaktivkatalysator, (ii) Hydroxylgruppe an besagtem hydroxyfunktionellen Zusatzmittel oder (iii) als Produkt mit während der Härtung besagter Ueberzugsmasse erfolgter Veresterung besagter Epoxifunktionalität an besagtem Polyepoxidharz vorliegender Hydroxyfunktionalität ausreicht.

27. Masse nach einem der vorhergehenden Ansprüche, worin besagtes Aminoharzvernetz-

21

**0 013 825**

ungsmittel als ein unter Kondensationsprodukten von Formaldehyd mit Melamin, substituiertem Melamin, Harnstoff, Benzguanamin und substituiertem Benzguanamin sowie Gemischen besagter Kondensationsprodukte ausgewähltes Amin/Aldehydharz in einer zur Lieferung von 0,6 bis 2,1 Aequivalenten Stickstoffvernetzungsfunktionalität pro Aequivalent Hydroxyfunktionalität ausreichenden Menge vorliegt.